(19) **Europäisches Patentamt**

**European Patent Office**

**Office européen des brevets**

(11) **EP 1 174 453 A1**

(12) **EUROPEAN PATENT APPLICATION**

(43) Date of publication:
   **23.01.2002 Bulletin 2002/04**

(51) Int Cl.⁷: **C08G 18/48**, C08G 18/76

(21) Application number: **00115407.9**

(22) Date of filing: **17.07.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **HUNTSMAN INTERNATIONAL LLC**<br>**Salt Lake City, Utah 84108 (US)** | (72) Inventor: **The designation of the inventor has not yet been filed**<br><br>(74) Representative:<br>**Baken, Philippus Johannes Leonardus Henricus**<br>**HUNTSMAN ICI (EUROPE) BVBA, Huntsman**<br>**Polyurethanes, Intellectual Property**<br>**Department, Everslaan 45**<br>**3078 Everberg (BE)** |

(54) **Process for preparing a flexible polyurethane foam**

(57) Process for preparing flexible polyurethane foam by reacting an MDI-based polyisocyanate and a polyether polyol with a functionality of 5-8 and an EO content of at least 50% by weight.

**Description**

The present invention is related to a process for preparing a flexible polyurethane foam and to such foams having specific properties.

More specifically the present invention is related to a process for preparing a flexible polyurethane foam using a polyoxyalkylene polyol having special properties and a polyisocyanate having a high 4,4'-diphenylmethane diisocyanate (4,4'-MDI) content. Processes for preparing flexible foams from polyols having a high oxyethylene (EO) content and a polyisocyanate having a high 4,4'-MDI content, have been disclosed in EP 547765. The examples shown in this EP 547765 give low density foams with a low resilience.

Copending application EP 99105419.8 discloses a process for making a moulded polyurethane material, like a flexible polyurethane foam, by reacting 4,4'-diphenylmethane diisocyanate, a polyol having a high oxyethylene content and water.

Pending European patent applications 00102963.6 and 00109580.1 are related to a process for making moulded and slabstock flexible polyurethane foams respectively, both using a polyisocyanate-reactive composition comprising 80-100% by weight of a polyether polyol having an average nominal functionality of 2-6, an average equivalent weight of 750-5000, an average molecular weight of 2000-10000, an oxyethylene content of 60-90% by weight and a primary hydroxyl content of 70-100%.

Surprisingly, it has been found that when a special class of polyols is used stable foams can be made which show a high resilience at low density, have low recession and/or a low hysteresis loss and more open cells. Foams when made in a mould can be easily demoulded even if no external mould release agent is applied after the first moulding has been made.

Foams can be made more easily because the viscosity of the raw material is low. Further the formulation latitude is wider and in general foam properties remain acceptable at lower densities.

Therefore the present invention is concerned with a process for preparing a flexible polyurethane foam having core density of 15-150 kg/m$^3$ comprising reacting a polyisocyanate and an isocyanate-reactive composition in the presence of water, wherein the reaction is conducted at an isocyanate index of 50 to 130, the polyisocyanate consists of a) 80-100% by weight of diphenylmethane diisocyanate comprising at least 40%, preferably at least 60% and most preferably at least 85% by weight of 4,4'-diphenylmethane diisocyanate and/or a derivative of said diphenylmethane diisocyanate which derivative has an NCO value of at least 20% by weight (polyisocyanate a), and b) 20-0% by weight of another polyisocyanate (polyisocyanate b), and wherein the isocyanate-reactive composition consists of a) 75-100 and preferably 80-100 and most preferably 90-100% by weight of a polyether polyol (polyol a) having an average nominal functionality of 5-8, an average equivalent weight of 500-2000, an average molecular weight of 4000-12000, an oxyethylene (EO) content of at least 50 and preferably of 50-90% by weight calculated on the weight of the polyether polyol and a primary hydroxyl content of less than 70% and b) 25-0 and preferably 20-0 and most preferably 10-0% by weight of one or more other isocyanate-reactive compounds (isocyanate-reactive compound b) excluding water.

The foams have a core density of 15-150 kg/m$^3$ (ISO845), preferably of 25-60 kg/m$^3$ and a resilience (ISO 8307) of 45-80% and preferably of 50-80% and most preferably of 55-80%.

In the context of the present invention the following terms have the following meaning :

1) isocyanate index or NCO index or index :
the ratio of NCO-groups over isocyanate-reactive hydrogen atoms present in a formulation, given as a percentage :

$$\frac{[NCO] \times 100}{[active\ hydrogen]}\ (\%).$$

In other words the NCO-index expresses the percentage of isocyanate actually used in a formulation with respect to the amount of isocyanate theoretically required for reacting with the amount of isocyanate-reactive hydrogen used in a formulation.

It should be observed that the isocyanate index as used herein is considered from the point of view of the actual foaming process involving the isocyanate ingredient and the isocyanate-reactive ingredients. Any isocyanate groups consumed in a preliminary step to produce modified polyisocyanates (including such isocyanate-derivatives referred to in the art as prepolymers) or any active hydrogens consumed in a preliminary step (e.g. reacted with isocyanate to produce modified polyols or polyamines) are not taken into account in the calculation of the isocyanate index. Only the free isocyanate groups and the free isocyanate-reactive hydrogens (including those of the water) present at the actual foaming stage are taken into account.

2) The expression "isocyanate-reactive hydrogen atoms" as used herein for the purpose of calculating the isocyanate index refers to the total of active hydrogen atoms in hydroxyl and amine groups present in the reactive compositions; this means that for the purpose of calculating the isocyanate index at the actual foaming process one hydroxyl group is considered to comprise one reactive hydrogen, one primary amine group is considered to comprise one reactive hydrogen and one water molecule is considered to comprise two active hydrogens.

3) Reaction system : a combination of components wherein the polyisocyanates are kept in one or more containers separate from the isocyanate-reactive components.

4) The expression "polyurethane foam" as used herein refers to cellular products as obtained by reacting polyisocyanates with isocyanate-reactive hydrogen containing compounds, using foaming agents, and in particular includes cellular products obtained with water as reactive foaming agent (involving a reaction of water with isocyanate groups yielding urea linkages and carbon dioxide and producing polyurea-urethane foams) and with polyols, aminoalcohols and/or polyamines as isocyanate-reactive compounds.

5) The term "average nominal hydroxyl functionality" is used herein to indicate the number average functionality (number of hydroxyl groups per molecule) of the polyol or polyol composition on the assumption that this is the number average functionality (number of active hydrogen atoms per molecule) of the initiator(s) used in their preparation although in practice it will often be somewhat less because of some terminal unsaturation.

6) The word "average" refers to number average unless indicated otherwise.

Preferably the polyisocyanate a) is selected from 1) a diphenylmethane diisocyanate comprising at least 40%, preferably at least 60% and most preferably at least 85% by weight of 4,4'-diphenylmethane diisocyanate and the following preferred derivatives thereof : 2) a carbodiimide and/or uretonimine modified variant of polyisocyanate 1), the variant having an NCO value of 20% by weight or more; 3) a urethane modified variant of polyisocyanate 1) and/or of the carbodiimide and/or uretonimine modified polyisocyanate 2), the variant having an NCO value of 20% by weight or more and being the reaction product of an excess of polyisocyanate 1) and/or of the carbodiimide and/or uretonimine modified polyisocyanate 2), and of a polyol having an average nominal hydroxyl functionality of 2-4 and an average molecular weight of at most 1000; 4) a prepolymer having an NCO value of 20% by weight or more and which is the reaction product of an excess of any of the aforementioned polyisocyanates 1-3) and of a polyether polyol having an average nominal functionality of 2-8, an average molecular weight of 2000-12000 and preferably an hydroxyl value of 15 to 60 mg KOH/g, and 5) mixtures of any of the aforementioned polyisocyanates. Polyisocyanate 1) comprises at least 40% by weight of 4,4'-MDI. Such polyisocyanates are known in the art and include pure 4,4'-MDI and isomeric mixtures of 4,4'-MDI and up to 60% by weight of 2,4'-MDI and 2,2'-MDI.

It is to be noted that the amount of 2,2'- MDI in the isomeric mixtures is rather at an impurity level and in general will not exceed 2% by weight, the remainder being 4,4'-MDI and 2,4'-MDI. Polyisocyanates as these are known in the art and commercially available; for example Suprasec™ MPR ex Huntsman Polyurethanes, which is a business of Huntsman ICI Chemicals LLC (who owns the Suprasec trademark).

The carbodiimide and/or uretonimine modified variants of the above polyisocyanate 1) are also known in the art and commercially available; e.g. Suprasec 2020, ex Huntsman Polyurethanes.

Urethane modified variants of the above polyisocyanates 1) and 2) are also known in the art and commercially available; e.g. Suprasec 2021 ex Huntsman Polyurethanes.

Aforementioned prepolymers of polyisocyanate 1) having an NCO value of 20% by weight or more are also known in the art. Preferably the polyol used for making these prepolymers is selected from polyoxyethylene polyoxypropylene polyols having an average nominal functionality of 2-4, an average molecular weight of 2500-10000, and preferably an hydroxyl value of 15-60 mg KOH/g and either an oxyethylene content of 5-25% by weight, which oxyethylene preferably is at the end of the polymer chains, or an oxyethylene content of 50-90% by weight, which oxyethylene preferably is randomly distributed over the polymer chains.

The other polyisocyanate b) may be chosen from aliphatic, cycloaliphatic, araliphatic and, preferably, aromatic polyisocyanates, such as toluene diisocyanate in the form of its 2,4 and 2,6-isomers and mixtures thereof and mixtures of diphenylmethane diisocyanates (MDI) and oligomers thereof having an isocyanate functionality greater than 2 known in the art as "crude" or polymeric MDI (polymethylene polyphenylene polyisocyanates). Mixtures of toluene diisocyanate and polymethylene polyphenylene polyisocyanates may be used as well.

Polyol a) is selected from those, which have an average nominal functionality of 5-8, an average equivalent weight of 500-2000 and a molecular weight of 4000-12000, an oxyethylene content of at least 50 and preferably of 50-90 % by weight and a primary hydroxyl content of less than 70% and preferably of 10 to less than 70%, calculated on the number of primary and secondary hydroxyl groups. Mixtures of polyols may be used. Methods to prepare such polyols are known. The other isocyanate-reactive compounds, which may be used in an amount of 0-25% by weight may be selected from polyether polyamines, polyester polyols and polyether polyols (different from the above described ones) having a molecular weight of 2000 or more and in particular from such other polyether polyols, which may be selected from polyoxyethylene polyols, polyoxypropylene polyols and polyoxyethylene polyoxypropylene polyols. Preferred polyoxyethylene polyoxypropylene polyols are those having an oxyethylene content of 5-30% and preferably 10-25% by weight, wherein all the oxyethylene groups are at the end of the polymer chains (so-called EO-tipped polyols) and those having an oxyethylene content of 60-90% by weight and a primary hydroxyl content of 70% or more, calculated on the number of primary and secondary hydroxyl groups in the polyol. Preferably these other polyether polyols have an average nominal functionality of 2-6, more preferably 2-4 and an average molecular weight of 2000-10000, more preferably of 2500-8000. Further, the other isocyanate-reactive compounds may be selected from chain extenders and cross-linkers, which are isocyanate-reactive compounds having an average molecular weight below 2000, preferably up to 1000 and a functionality of 2-8. Examples of such chain-extenders and cross-linkers are ethylene glycol, butanediol, diethylene glycol, propylene glycol, dipropylene glycol, glycerol, trimethylolpropane, pentaerythritol, sucrose, sorbitol, mono-, di- and triethanolamine, ethylenediamine, toluenediamine, diethyltoluene diamine, polyoxyethylene polyols having an average nominal functionality of 2-8 and an average molecular weight of less than 2000 like ethoxylated ethylene glycol, butane diol, diethylene glycol, propylene glycol, dipropylene glycol, glycerol, trimethylolpropane, pentaerythritol, sucrose and sorbitol having said molecular weight, and polyether diamines and triamines having an average molecular weight below 2000.

Polyoxyethylene polyols having an average nominal functionality of 2-8 and an average molecular weight of 150-3000 are the most preferred other isocyanate-reactive compounds.

Mixtures of the aforementioned other isocyanate-reactive compounds may be used as well. The polyols may comprise dispersions or solutions of addition or condensation polymers in polyols of the types described above. Such modified polyols, often referred to as "polymer polyols" have been fully described in the prior art and include products obtained by the in situ polymerisation of one or more vinyl monomers, for example styrene and/or acrylonitrile, in the above polyether polyols, or by the in situ reaction between a polyisocyanate and an amino- and/or hydroxy-functional compound, such as triethanolamine and/or hydrazine in the above polyol. Polyoxyalkylene polyols containing from 1 to 50% by weight of dispersed polymer are particularly useful. Particle sizes of the dispersed polymer of less than 50 microns are preferred.

During the last years several methods have been described to prepare polyether polyols having a low level of unsaturation. These developments have made it possible to use polyether polyols at the higher end of the molecular weight range since such polyols can now be prepared with an acceptably low level of unsaturation. According to the present invention polyols having a low level of unsaturation may be used as well. In particular such high molecular weight polyols having a low level of unsaturation may be used.

Still further the following optional ingredients may be used, amongst others : catalysts enhancing the formation of urethane bonds like metal catalysts such as bismuth carboxylates, zinc carboxylates and mercury carboxylates and like tin catalysts such as tin octoate and dibutyltindilaurate, tertiary amine catalysts like triethylenediamine and imidazoles like dimethylimidazole and other catalysts like maleate esters and acetate esters; surfactants; fire retardants; smoke suppressants; UV-stabilizers; colorants; microbial inhibitors and fillers.

Water is used as blowing agent optionally together with other blowing agents known in the art like hydrocarbons, so called CFC's and HCFC's, $N_2$ and $CO_2$. Most preferably water is used as the blowing agent, optionally together with $CO_2$. The amount of blowing agent will depend on the desired density. The amount of water will be between 0.8-5% by weight, calculated on the amount of all other ingredients used.

The reaction to prepare the foams is conducted at an NCO index of 50-130 and preferably of 70-120.

The ingredients used for making the foams may be fed separately to a mixing device. Preferably, one or more of the isocyanate-reactive ingredients are premixed, optionally together with the optional ingredients, before being brought into contact with the polyisocyanate.

The foams may be made according to the free rise process or the restricted rise process; they may be made in open or closed moulds, according to the so-called batch-block process, a continuous slabstock process, a continuous lamination process or a continuous backing process like carpet- or textile- backing.

The foams are useful in furniture, bedding, cushioning and automotive seating.

Examples

Foams were made in open 2.5 l buckets by adding, mixing and allowing to react 47 parts by weight (pbw) of a 30/70 w/w mixture of Suprasec 2020 and Suprasec MPR and 103 pbw of a polyol mixture comprising 100 pbw of polyol 1), 0.5 pbw of D33LV a catalyst from Air Products and 2.5 pbw of water. In one formulation an additional 5 pbw of a sorbitol initiated polyoxyethylene polyol having an OH value of 187 mg KOH/g was used (polyol 2)). Suprasec 2020 is a uretonimine-modified 4,4'-MDI from Huntsman Polyurethanes having an NCO value of 29.3% by weight. Suprasec MPR is 4,4'-MDI from Huntsman Polyurethanes. Suprasec is a trademark of Huntsman ICI Chemicals LLC. Polyol 1 is a sorbitol initiated, polyoxyethylene polyoxypropylene polyol having an OH value of 42 mg KOH/g, an EO content of about 75% by weight and a primary hydroxyl content of 39%. The properties of the foams obtained were as follows :

| Polyol 2 | + | - |
|---|---|---|
| index | 101 | 97 |
| recession, % | 3 | 1 |
| closed/open cells | open | open |
| compression load deflection at 40%, kPa (ISO 3386) | 2.3 | 2.5 |
| hysteresis loss, % - ISO 3386 | 12.2 | 19.8 |
| resilience, %, ISO 8307 | 61 | 68 |
| core density, kg/m$^3$, ISO 845 | 44 | 43 |

**Claims**

1. A process for preparing a flexible polyurethane foam having a core density of 15-150 kg/m$^3$ comprising reacting a polyisocyanate and an isocyanate-reactive composition in the presence of water wherein the reaction is conducted at an isocyanate index of 50 to 130, the polyisocyanate consists of

   a) 80-100% by weight of a diphenylmethane diisocyanate comprising at least 40% by weight of 4,4'-diphenylmethane diisocyanate and/or a derivative of said diphenylmethane diisocyanate which derivative has an NCO value of at least 20% by weight, and
   b) 20-0% by weight of another polyisocyanate, and wherein the isocyanate-reactive composition consists of a) 75-100 and preferably 80-100 and most preferably 90-100% by weight of a polyether polyol having an average nominal functionality of 5-8, an average equivalent weight of 500-2000, an average molecular weight of 4000-12000, an oxyethylene content of at least 50% by weight calculated on the weight of the polyether polyol and a primary hydroxyl content of less than 70% and b) 25-0% by weight of one or more other isocyanate-reactive compounds excluding water.

2. Process according to claim 1 wherein the density is 25-60 kg/m$^3$.

3. Process according to claims 1-2, wherein the amount of water is 0.8-5% by weight calculated on all other ingredients used.

4. Process according to claims 1-3, wherein the index is 70-120.

**European Patent Office**

## EUROPEAN SEARCH REPORT

Application Number

EP 00 11 5407

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 521 226 A (BLEYS GEERT) 28 May 1996 (1996-05-28) * column 1, line 25 - column 3, line 23 * * example 8; table 3 * | 1-4 | C08G18/48 C08G18/76 |
| A | US 5 369 138 A (GANSEN PETER) 29 November 1994 (1994-11-29) * column 2, line 15 - line 52 * * example 3 * | 1-4 | |
| A | US 5 677 361 A (TREBOUX JEAN-PAUL RENE ET AL) 14 October 1997 (1997-10-14) * column 8 - column 10; example 1; table I * | 1-4 | |

| | | | TECHNICAL FIELDS SEARCHED (Int.Cl.7) |
|---|---|---|---|
| | | | C08G |

The present search report has been drawn up for all claims

| Place of search | Date of completion of the search | Examiner |
|---|---|---|
| THE HAGUE | 29 December 2000 | Neugebauer, U |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 174 453 A1

**ANNEX TO THE EUROPEAN SEARCH REPORT
ON EUROPEAN PATENT APPLICATION NO.** EP 00 11 5407

This annex lists the patent family members relating to the patent documents cited in the above-mentioned European search report.
The members are as contained in the European Patent Office EDP file on
The European Patent Office is in no way liable for these particulars which are merely given for the purpose of information.

29-12-2000

| Patent document cited in search report | | Publication date | Patent family member(s) | | Publication date |
|---|---|---|---|---|---|
| US 5521226 | A | 28-05-1996 | AU | 654593 B | 10-11-1994 |
| | | | AU | 2857092 A | 24-06-1993 |
| | | | CA | 2084809 A | 18-06-1993 |
| | | | CN | 1073690 A,B | 30-06-1993 |
| | | | CN | 1215066 A | 28-04-1999 |
| | | | DE | 69221274 D | 04-09-1997 |
| | | | DE | 69221274 T | 04-12-1997 |
| | | | EP | 0547764 A | 23-06-1993 |
| | | | ES | 2104852 T | 16-10-1997 |
| | | | JP | 5262844 A | 12-10-1993 |
| | | | KR | 251337 B | 15-04-2000 |
| | | | ZA | 9209105 A | 05-05-1994 |
| US 5369138 | A | 29-11-1994 | DE | 4204395 A | 19-08-1993 |
| | | | CA | 2089318 A | 15-08-1993 |
| | | | DE | 59306002 D | 07-05-1997 |
| | | | EP | 0555721 A | 18-08-1993 |
| | | | ES | 2100377 T | 16-06-1997 |
| | | | JP | 6025378 A | 01-02-1994 |
| | | | MX | 9300479 A | 01-09-1993 |
| US 5677361 | A | 14-10-1997 | AT | 170199 T | 15-09-1998 |
| | | | AU | 689832 B | 09-04-1998 |
| | | | AU | 1191695 A | 27-06-1995 |
| | | | BR | 9408191 A | 26-08-1997 |
| | | | CA | 2177710 A | 15-06-1995 |
| | | | CN | 1136815 A,B | 27-11-1996 |
| | | | CZ | 9601677 A | 15-01-1997 |
| | | | DE | 69412856 D | 01-10-1998 |
| | | | DE | 69412856 T | 14-01-1999 |
| | | | DK | 733078 T | 25-05-1999 |
| | | | WO | 9515990 A | 15-06-1995 |
| | | | EP | 0733078 A | 25-09-1996 |
| | | | ES | 2120166 T | 16-10-1998 |
| | | | HU | 74892 A,B | 28-02-1997 |
| | | | JP | 9506131 T | 17-06-1997 |
| | | | NO | 962388 A | 06-08-1996 |
| | | | PL | 314877 A | 30-09-1996 |
| | | | US | 5668378 A | 16-09-1997 |
| | | | ZA | 9409705 A | 06-06-1996 |

EPO FORM P0459

For more details about this annex : see Official Journal of the European Patent Office, No. 12/82

7